# EUROPÄISCHE PATENTSCHRIFT

(11) **EP 1 514 033 B1**
(45) Veröffentlichungstag und Bekanntmachung des Hinweises auf die Patenterteilung: **12.03.2008**
(21) Anmeldenummer: 03727866.0
(22) Anmeldetag: 06.06.2003
(51) Int. Cl.: F16C 17/10

(54) **LAGER FÜR DEN ROTOR EINER ROTIERENDEN MASCHINE**
BEARING FOR THE ROTOR OF A ROTATING MACHINE
PALIER POUR LE ROTOR D'UNE MACHINE ROTATIVE

(30) Priorität: 19.06.2002 CH 10432002
(43) Veröffentlichungstag der Anmeldung: 16.03.2005
(73) Patentinhaber: Alstom Technology Ltd, 5401 Baden (CH)
(72) Erfinder: FUERST, Axel, Günter, Albert, CH-5412 Gebenstorf (CH); MATYSCAK, Kamil, 79777 Brenden Ühlingen-Birkendorf (DE)
(86) Internationale Anmeldenummer: PCT/IB2003/002364
(87) Internationale Veröffentlichungsnummer: WO 2004/001241

(56) Entgegenhaltungen:
- EP-A- 0 277 442
- WO-A-93/17249
- DE-A- 2 103 830
- US-A- 2 901 297
- US-A- 5 626 470
- US-A- 6 017 184

## Beschreibung

### TECHNISCHES GEBIET

Die vorliegende Erfindung bezieht sich auf das Gebiet der rotierenden Maschinen. Sie betrifft ein Lager für den Rotor einer rotierenden Maschine gemäss dem Oberbegriff des Anspruchs 1.

Ein solches Lager ist z.B. aus der CH 651 362 A bekannt.

### STAND DER TECHNIK

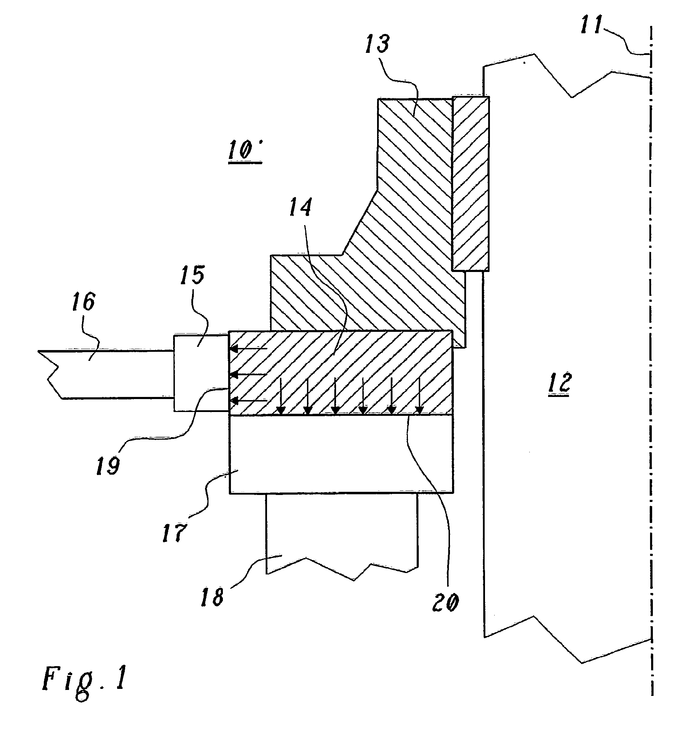

Rotoren grosser rotierender Maschinen wie zum Beispiel Hydrogeneratoren werden in der Regel durch hydrodynamische Gleitlager getragen. Bei diesen Lagern wird die axiale und radiale Führung durch getrennte Lager unterschiedlicher Bauform übernommen. Eine teilweise Zusammenfassung dieser an sich getrennten Lager ist insofern möglich, als ein in einem axialen Lager laufender Laufring zusätzlich radiale Kräfte aufnimmt, indem radiale Führungssegmente um diesen herum angeordnet werden. Eine solche Konfiguration, wie sie aus der eingangs genannten CH 651 362 A (siehe die dortige Fig. 1) bekannt ist, ist in stark vereinfachter Form in Fig. 1 wiedergegeben. Bei der rotierenden Maschine 10' der Fig. 1 ist der Rotor mit der Rotorwelle 12 um eine vertikale Drehachse 11 drehbar gelagert. Dazu ist an der Rotorwelle 12 über einen Flansch 13 ein Laufring 14' befestigt, der mit der Unterseite auf der Gleitfläche 20 eines aus einzelnen Segmenten bestehenden Axiallagers oder Traglagers 17 gleitet (senkrechte Pfeile in Fig. 1). Das Axiallager 17 ist seinerseits durch eine Abstützung 18 in axialer Richtung abgestützt. Mit der Aussenseite gleitet der Laufring 14' an der Gleitfläche 19 eines Radiallagers oder Führungslagers 15 entlang (waagerechte Pfeile in Fig. 1). Das Radiallager 15 wird seinerseits durch Abstützungen 16 in radialer Richtung abgestützt.

Das Axiallager 17 und das Radiallager bzw. Führungslager 15 funktionieren in dieser bekannten Konfiguration unabhängig voneinander. Beide Lager laufen in einem Ölbad. Die Funktion "Tragen des Rotors" wird vom Axiallager 17, die Funktion "Führen des Rotors" wird vom Führungs- bzw. Radiallager 15 wahrgenommen. Beide Lager haben eigene, für die jeweilige Funktion angepasste Segmente.

Nachteilig ist bei der bekannten Lagerung mit den getrennten Lagerfunktionen, dass die Dicke des Laufrings in axialer Richtung gross genug gewählt werden muss, um die seitlich am Laufring angeordnete radiale Lagerung zu ermöglichen. Dadurch wird die Maschine in axialer Richtung insgesamt länger.

Nachteilig ist aber auch, dass die radiale Lagerung auf der Aussenseite des Laufringes platziert ist. An dieser Stelle sind die Umfangsgeschwindigkeiten vergleichsweise gross, was zu entsprechend hohen Reibungsverlusten führt.

Schliesslich müssen für die beiden Lager getrennte Segmente hergestellt und eingebaut werden, wodurch der Herstellungs- und Montageaufwand der Lagerung insgesamt deutlich erhöht wird.

Aus der Druckschrift EP-A1-0 277 442 ist eine Lagerung für eine liegende Welle bekannt, bei der um die Welle herum verteilt in einer ölgefüllten Kammer mehrere Gleitstücke angeordnet sind, welche die Welle an den Innenseiten radial abstützen und auf beiden Seiten an Abstützflächen von axialen Anschlägen der Welle angrenzen, welche die Kammerwände bilden. Diese Art der kombinierten Axial- und Radiallagerung ist für die vertikalen Rotoren von schweren Hydrogeneratoren nicht geeignet, weil die grossen axialen Tragkräfte des Rotors nicht durch eine axiale Abstützung der Gleitstücke aufgefangen werden können.

### DARSTELLUNG DER ERFINDUNG

Es ist daher Aufgabe der Erfindung, ein Lager für eine rotierende Maschine zu schaffen, welches die Nachteile bekannter Lager vermeidet uns sich insbesondere durch einen vereinfachten, platzsparenden Aufbau auszeichnet und im Betrieb zu deutlich verringerten Reibungsverlusten führt.

Die Aufgabe wird durch die Gesamtheit der Merkmale des Anspruchs 1 gelöst. Der Kern der Erfindung besteht darin, das bisher getrennte Radiallager und Axiallager (bzw. deren Lagersegmente) zu einem kombinierten Radial- und Axiallager zusammenzufassen, welches gleichzeitig axiale Gleitflächen und radiale Gleitflächen aufweist. Anders als beim Stand der Technik gemäss Fig. 1, bei dem zwar für beide Lager ein gemeinsamer Laufring am Rotor befestigt ist, jedoch für beide Lager separate Lagersegmente eingesetzt werden, sind hier die beiden Gleitflächen am selben Lager (bzw. Lagersegment) angeordnet. Hierdurch wird ein vereinfachter, kompakterer Aufbau des Lagers ermöglicht, bei dem durch eine geschickte Anordnung der Gleitflächen zugleich die Reibungsverluste verringert werden können.

Eine erste bevorzugte Ausgestaltung der Erfindung ist dadurch gekennzeichnet, dass das kombinierte Radial- und Axiallager eine Mehrzahl von einzelnen Lagersegmenten umfasst, welche die Form von Kreisringabschnitten aufweisen und voneinander beabstandet in einem Ring um die Drehachse herum angeordnet sind, dass an jedem der Lagersegmente eine axiale Gleitfläche und eine radiale Gleitfläche ausgebildet sind, und dass jedes Lagersegment eine eigene radiale Abstützung aufweist.

Dabei ist gemäss einer Alternative das kombinierte Radial- und Axiallager in einem Ölbad angeordnet.

Eine andere Alternative zeichnet sich dadurch aus, dass in den Lagersegmenten Mittel zur Zuführung von Schmieröl vorgesehen sind, welches Schmieröl durch Austrittsöffnungen in den axialen und radialen Gleitflächen auf die Gleitflächen austritt, wobei vorzugsweise in jedem Lagersegment in der axialen Gleitfläche eine erste Austrittsöffnung vorgesehen ist, welche die Form eines sich in radialer Richtung erstreckenden länglichen Schlitzes aufweiset und in Drehrichtung gesehen am Anfang der axialen Gleitfläche angeordnet ist, und wobei in jedem Lagersegment eine zweite Austrittsöffnung in der radialen Gleitfläche vorgesehen ist, welche die Form eines sich in axialer Richtung erstreckenden länglichen Schlitzes aufweist und in Drehrichtung gesehen am Anfang der radialen Gleitfläche augeordnet ist. Die Austrittsöffnungen jedes Lagersegmentes sind bevorzugt über Verbindungskanäle mit einer gemeinsamen Ölzufuhrbohrung verbunden.

Die erfindungsgemässe Lagerung vereinfacht sich weiter und zeichnet sich durch verringerte Reibungsverluste aus, wenn gemäss einer anderen vorteilhaften Ausgestaltung der Rotor eine Rotorwelle aufweist, wenn an der Rotorwelle ein die Rotorwelle konzentrisch umgebender Laufring befestigt ist, mit welchem der Rotor auf den axialen Gleitflächen des kombinierten Radial- und Axiallagers gleitet, und wenn der Rotor mit der Rotorwelle selbst auf den radialen Gleitflächen des kombinierten Radial- und Axiallagers gleitet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer vereinfachten, teilweise längsgeschnittenen Darstellung eine Lagerung des Rotors eines vertikal stehenden Hydrogenerators mit getrenntem Radial- und Axiallager nach dem Stand der Technik;
- Fig. 2: in einer zu Fig. 1 vergleichbaren Darstellung eine Lagerung mit kombiniertem Radial- und Axiallager gemäss einem bevorzugten Ausführungsbeispiel der Erfindung; und
- Fig. 3: in einer perspektivischen Ansicht in radiale Richtung ein einzelnes Lagersegment der in Fig. 2 gezeigten Lagerung, bei dem den Gleitflächen gezielt Schmieröl innerhalb des Lagersegments zugeführt wird.

### WEGE ZUR AUSFÜHRUNG DER ERFINDUNG

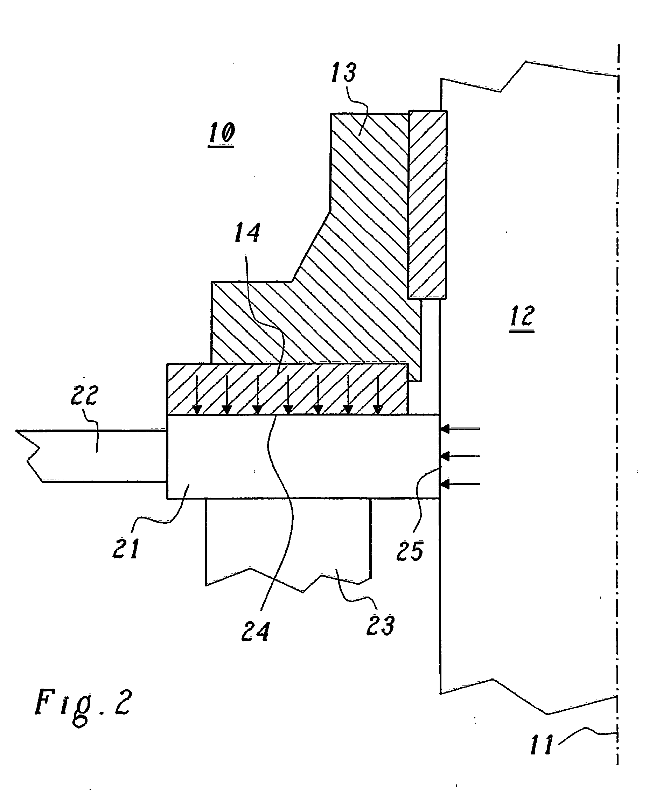

In Fig. 2 ist in einer zu Fig. 1 vergleichbaren Darstellung eine Lagerung mit kombiniertem Radial- und Axiallager gemäss einem bevorzugten Ausführungsbeispiel der Erfindung wiedergegeben. Gleiche Teile werden dabei weitgehend mit den denselben Bezugszeichen bezeichnet. Die rotierende Maschine 10 dreht mit einem Rotor, von dem in Fig. 2 ein Teil der Rotorwelle 12 gezeigt ist, um die vertikale Drehachse 11. An der Rotorwelle 12 ist über einen Flansch 13 ein Laufring 14 befestigt, der ausschliesslich der axialen Lagerung dient. Er kann daher in seiner axialen Dicke gegenüber dem Laufring 14' aus Fig. 1 deutlich reduziert werden.

Der Rotor gleitet mit dem Laufring 14 auf der oberen, axialen (horizontalen) Gleitfläche 24 eines kombinierten (aus Lagersegmenten zusammengesetzten) Radial- und Axiallagers 21, das seinerseits in axialer Richtung von einer axialen Abstützung 23 abgestützt wird. Das kombinierte Radial- und Axiallager 21 ist in radialer Richtung zur Rotorwelle 12 hin soweit verlängert, dass eine radiale (vertikale) Gleitfläche 25 ausgebildet werden kann, an welcher die Rotorwelle 12 geführt wird. Das kombinierte Radial- und Axiallager 21 ist dazu in radialer Richtung durch eine radiale Abstützung 22 abgestützt. Da die radiale Gleitfläche 25 sehr viel weiter innen liegt, als die radiale Gleitfläche 19 bei dem bekannten Lager aus Fig. 1, ergibt sich bei gleicher Drehzahl eine sehr viel niedrigere Umfangsgeschwindigkeit, was zu niedrigeren Reibungsverlusten und damit einer geringeren Erwärmung führt.

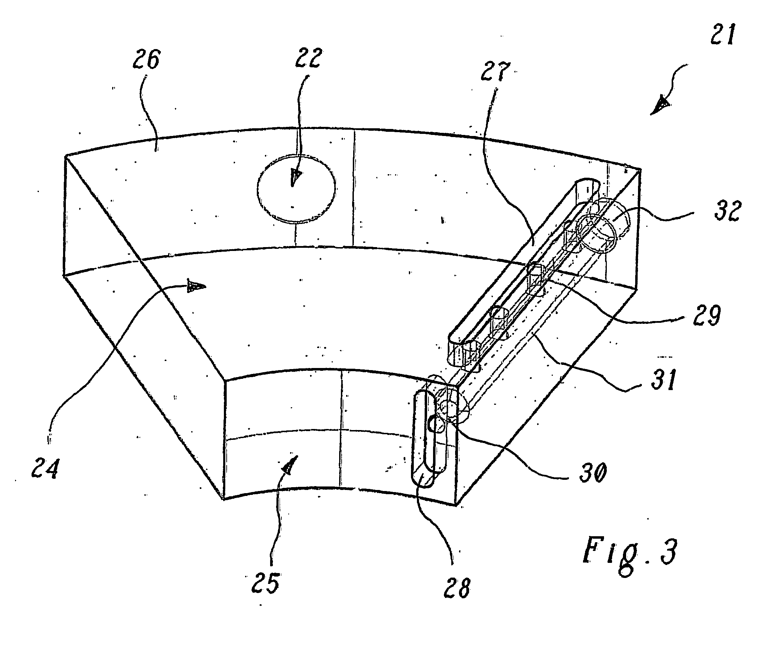

Das kombinierte Radial- und Axiallager 21 besteht vorzugsweise aus einzelnen Lagersegmenten 26 gemäss Fig. 3, welche die Form von Kreisringabschnitten aufweisen und voneinander beabstandet in einem Ring um die Drehachse 11 bzw. Rotorwelle 12 herum angeordnet sind. An jedem der Lagersegmente 26 ist dabei eine axiale Gleitfläche 24 und eine radiale Gleitfläche 25 ausgebildet. Jedes der Lagersegmente 26 weist eine eigene radiale Abstützung 22 auf, deren Krafteinleitungsfläche in Fig. 3 durch einen Kreis angedeutet ist.

Das kombinierte Radial- und Axiallager 21 kann grundsätzlich in einem Ölbad angeordnet sein. Bevorzugt sind jedoch in den Lagersegmenten 26 gemäss Fig. 3 Mittel 29,..,32 zur Zuführung von Schmieröl vorgesehen wobei das Schmieröl durch Austrittsöffnungen 27, 28 in den axialen und radialen Gleitflächen 24 bzw. 25 auf die Gleitflächen 24, 25 austritt. Die Mittel umfassen in der axialen Gleitfläche 24 eine erste Austrittsöffnung 27, welche die Form eines sich in radialer Richtung erstreckenden länglichen Schlitzes aufweist und in Drehrichtung gesehen am Anfang der axialen Gleitfläche 24 angeordnet ist. Das durch den Schlitz austretende Schmieröl wird so durch den über die Gleitfläche 24 gleitenden Lagerring 14 in Form eines Schmierfilms auf der Gleitfläche 24 verteilt. Analog ist in der radialen Gleitfläche 25 eine zweite Austrittsöffnung 28 vorgesehen ist, welche die Form eines sich in axialer Richtung erstreckenden länglichen Schlitzes aufweist und in Drehrichtung gesehen am Anfang der radialen Gleitfläche 25 angeordnet ist.

Das aus den Austrittsöffnungen 27, 28 austretenden Schmieröl wird über eine im Inneren des Lagersegments 26 angeordnete radiale Ölzufuhrbohrung 31 von einem rückwärtigen Anschluss 32 aus herangeführt und über Verbindungskanäle 29, 30 auf die Austrittsöffnungen 27, 28 verteilt. Bei der vergleichsweise langen Austrittsöffnung 27 sind dabei über die Länge verteilt mehrere Verbindungskanäle 29 vorgesehen.

Die Erfindung ist am Beispiel eines vertikal stehenden Hydrogenerators erläutert worden. Es versteht sich von selbst, dass der Einsatz des erfindungsgemässen kombinierten Radial- und Axiallagers nicht auf derartige Hydrogeneratoren beschränkt ist.

Insgesamt ergibt sich mit der Erfindung ein kombiniertes Radial- und Axiallager, das sich speziell durch folgende Vorteile auszeichnet:
- Das Lager braucht in der axialen Richtung weniger Platz. Die ganze Maschine kann also niedriger gebaut werden.
- Das Radiallager hat zur Welle hin einen kleineren Radius. Das bedeutet eine niedrigere Umfangsgeschwindigkeit und dadurch kleinere Reibungsverluste.
- Insgesamt werden weniger Lagerteile benötigt.

### BEZUGSZEICHENLISTE

- 10,10': rotierende Maschine (z.B. Hydrogenerator)
- 11: Drehachse
- 12: Rotorwelle
- 13: Flansch
- 14,14': Laufring
- 15: Radiallager (Führungslager)
- 16: Abstützung (Radiallager)
- 17: Axiallager (Traglager)
- 18: Abstützung (Axiallager)
- 19: Gleitfläche (Radiallager)
- 20: Gleitfläche (Axiallager)
- 21: kombiniertes Radial- und Axiallager
- 22: radiale Abstützung
- 23: axiale Abstützung
- 24: axiale Gleitfläche
- 25: radiale Gleitfläche
- 26: Lagersegment
- 27: Austrittsöffnung (axiale Gleitfläche)
- 28: Austrittsöffnung (radiale Gleitfläche)
- 29,30: Verbindungskanal
- 31: Ölzufuhrbohrung
- 32: Anschluss

## Patentansprüche

1. Lager für den Rotor eines um eine vertikale Drehachse (11) rotierenden Hydrogenerators (10), welches Lager als Gleitlager ausgebildet ist und erste Mittel (21, 24) zur axialen Lagerung in Form eines Traglagers sowie zweite Mittel (21, 25) zur radialen Lagerung umfasst, **dadurch gekennzeichnet, dass** die ersten und zweiten Mittel zu einem kombinierten Radial- und Axiallager (21) zusammengefasst sind, welches gleichzeitig horizontale axiale Gleitflächen (24) und radiale Gleitflächen (25) aufweist, und dass das kombinierte Radial- und Axiallager in axialer Richtung von einer axialen Abstützung (23) abgestützt wird.

2. Lager nach Anspruch 1, **dadurch gekennzeichnet, dass** das kombinierte Radial- und Axiallager (21) eine Mehrzahl von einzelnen Lagersegmenten (26) umfasst, welche die Form von Kreisringabschnitten aufweisen und voneinander beabstandet in einem Ring um die Drehachse (11) herum angeordnet sind, und dass an jedem der Lagersegmente (26) eine axiale Gleitfläche (24) und eine radiale Gleitfläche (25) ausgebildet sind.

3. Lager nach Anspruch 2, **dadurch gekennzeichnet, dass** jedes Lagersegment (26) eine eigene radiale Abstützung (22) aufweist.

4. Lager nach einem der Ansprüche 1 bis 3, **dadurch gekennzeichnet, dass** das kombinierte Radial- und Axiallager (21) in einem Ölbad angeordnet ist.

5. Lager nach einem der Ansprüche 2 oder 3, **dadurch gekennzeichnet, dass** in den Lagersegmenten (26) Mittel (29,..,32) zur Zuführung von Schmieröl vorgesehen sind, welches Schmieröl durch Austrittsöffnungen (27, 28) in den axialen und radialen Gleitflächen (24, 25) auf die Gleitflächen (24, 25) austritt.

6. Lager nach Anspruch 5, **dadurch gekennzeichnet, dass** in jedem Lagersegment (26) in der axialen Gleitfläche (24) eine erste Austrittsöffnung (27) vorgesehen ist, welche die Form eines sich in radialer Richtung erstreckenden länglichen Schlitzes aufweist und in Drehrichtung gesehen am Anfang der axialen Gleitfläche (24) angeordnet ist, und dass in jedem Lagersegment (26) in der radialen Gleitfläche (25) eine zweite Austrittsöffnung (28) vorgesehen ist, welche die Form eines sich in axialer Richtung erstreckenden länglichen Schlitzes aufweist und in Drehrichtung gesehen am Anfang der radialen Gleitfläche (25) angeordnet ist.

7. Lager nach Anspruch 6, **dadurch gekennzeichnet, dass** die Austrittsöffnungen (27, 28) jedes Lagersegmentes (26) über Verbindungskanäle (29, 30) mit einer gemeinsamen Ölzufuhrbohrung (31) verbunden sind.

8. Lager nach einem der Ansprüche 1 bis 7, **dadurch gekennzeichnet, dass** der Rotor eine Rotorwelle (12) aufweist, dass an der Rotorwelle (12) ein die Rotorwelle (12) konzentrisch umgebender Laufring (14) befestigt ist, mit welchem der Rotor auf den axialen Gleitflächen (24) des kombinierten Radial- und Axiallagers (21) gleitet, und dass der Rotor mit der Rotorwelle (12) selbst auf den radialen Gleitflächen (25) des kombinierten Radial- und Axiallagers (21) gleitet.

## Claims

1. Bearing for the rotor of a hydrogenerator (10) rotating about a vertical axis of rotation (11), which bearing is formed as a sliding bearing and comprises first means (21, 24) for axial mounting in the form of a supporting bearing, and second means (21, 25) for radial mounting, **characterized in that** the first and second means are combined to form a combined radial and axial bearing (21), which has horizontal axial sliding surfaces (24) and radial sliding surfaces (25) at the same time, and **in that** the combined radial and axial bearing is supported in the axial direction by an axial support (23).

2. Bearing according to Claim 1, **characterized in that** the combined radial and axial bearing (21) comprises a plurality of individual bearing segments (26), which have the form of circular ring sections and are arranged spaced apart from one another in a ring around the axis of rotation (11), and **in that** an axial sliding surface (24) and a radial sliding surface (25) are formed on each of the bearing segments (26).

3. Bearing according to Claim 2, **characterized in that** each bearing segment (26) has its own radial support (22).

4. Bearing according to one of Claims 1 to 3, **characterized in that** the combined radial and axial bearing (21) is arranged in an oil bath.

5. Bearing according to either of claims 2 and 3, **characterized in that** means (29,..,32) for supplying lubricating oil are provided in the bearing segments (26), which lubricating oil emerges onto the sliding surfaces (24, 25) through outlet openings (27, 28) in the axial and radial sliding surfaces (24, 25).

6. Bearing according to Claim 5, **characterized in that**, in each bearing segment (26), in the axial sliding surface (24), there is provided a first outlet opening (27), which has the form of an elongated slot extending in the radial direction and, as viewed in the direction of rotation, is arranged at the start of the axial sliding surface (24), and **in that** in each bearing segment (26), in the radial sliding surface (25), there is provided a second outlet opening (28), which has the form of an elongated slot extending in the axial direction and, as viewed in the direction of rotation, is arranged at the start of the radial sliding surface (25).

7. Bearing according to Claim 6, **characterized in that** the outlet openings (27, 28) of each bearing segment (26) are connected to a common oil feed bore (31) via connecting ducts (29, 30).

8. Bearing according to one of Claims 1 to 7, **characterized in that** the rotor has a rotor shaft (12), **in that** a running ring (14) surrounding the rotor shaft (12) concentrically is fixed to the rotor shaft (12), with which ring the rotor slides on the axial sliding surfaces (24) of the combined radial and axial bearing (21), and **in that** the rotor with the rotor shaft (12) itself slides on the radial sliding surfaces (25) of the combined radial and axial bearing (21).

## Revendications

1. Palier pour le rotor d'un générateur hydroélectrique (10) tournant autour d'un axe de rotation vertical (11), palier réalisé sous la forme d'un palier lisse et comprenant des premiers moyens (21, 24) pour l'appui axial sous la forme d'un palier d'appui, ainsi que des seconds moyens (21, 25) pour l'appui radial, **caractérisé en ce que** les premiers et les seconds moyens sont réunis pour former un palier radial et axial combiné (21) qui possède en même temps des surfaces de glissement horizontales axiales (24) et des surfaces de glissement radiales (25), et **en ce que** le palier radial et axial combiné est soutenu, dans la direction axiale, par un support axial (23).

2. Palier selon la revendication 1, **caractérisé en ce que** le palier radial et axial combiné (21) comprend une pluralité de segments de palier (26) individuels qui ont la forme de segments de couronne et qui sont disposés, à distance les uns des autres, sur une couronne autour de l'axe de rotation (11), et **en ce qu'**une surface de glissement axiale (24) et une surface de glissement radiale (25) sont formées sur chacun des segments de palier (26).

3. Palier selon la revendication 2, **caractérisé en ce que** chaque segment de palier (26) possède un support radial (22) propre.

4. Palier selon l'une des revendications 1 à 3, **caractérisé en ce que** le palier radial et axial combiné (21) est disposé dans un bain d'huile.

5. Palier selon l'une des revendications 2 ou 3, **caractérisé en ce que** des moyens (29, .., 32) pour l'amenée d'huile de lubrification sont prévus dans les segments de palier (26), l'huile de lubrification sortant sur les surfaces de glissement (24, 25) par des ouvertures de sortie (27, 28) dans les surfaces de glissement axiales et radiales (24, 25).

6. Palier selon la revendication 5, **caractérisé en ce qu'**une première ouverture de sortie (27), qui a la forme d'une rainure allongée s'étendant dans la direction radiale et qui est disposée, vue dans la direction de la rotation, au début de la surface de glissement axiale (24), est prévue dans la surface de glissement axiale (24) de chaque segment de palier (26), et **en ce qu'**une seconde ouverture de sortie (28), qui a la forme d'une rainure allongée s'étendant dans la direction axiale et qui est disposée, vue dans la direction de la rotation, au début de la surface de glissement radiale (25), est prévue dans la surface de glissement radiale (25) de chaque segment de palier (26).

7. Palier selon la revendication 6, **caractérisé en ce que** les ouvertures de sortie (27, 28) de chaque segment de palier (26) sont reliées à un perçage d'amenée d'huile commun (31) par l'intermédiaire de canaux de communication (29, 30).

8. Palier selon l'une des revendications 1 à 7, **caractérisé en ce que** le rotor est pourvu d'un arbre de rotor (12), **en ce qu'**un anneau d'appui (14), au moyen duquel le rotor glisse sur les surfaces de glissement axiales (24) du palier radial et axial combiné (21) et qui entoure l'arbre de rotor (12) de manière concentrique, est fixé sur l'arbre de rotor (12), et **en ce que** le rotor lui-même glisse, par l'intermédiaire de l'arbre de rotor (12), sur les surfaces de glissement radiales (25) du palier radial et axial combiné (21).
